# FASCICULE DE BREVET EUROPEEN

(11) **EP 1 626 402 B1**
(45) Date de publication et mention de la délivrance du brevet: **17.10.2007**
(21) Numéro de dépôt: 05291685.5
(22) Date de dépôt: 05.08.2005
(51) Int. Cl.: G11B 11/18

(54) **Equipement pour la lecture optique des disques phonographiques analogiques**
Anordnung zum optischen Auslesen analoger phonographischer Tonträger
Device for optically reading analogical phonographic disks

(30) Priorité: 12.08.2004 FR 0451841
(43) Date de publication de la demande: 15.02.2006
(73) Titulaire: Institut National de l'Audiovisuel - INA, 94360 Bry-sur-Marne (FR)
(72) Inventeur: Laborelli, Louis, 93160 Noisy-le-Grand (FR)
(74) Mandataire: Bredema

(56) Documents cités:
- US-A- 3 452 163
- US-A- 4 972 344
- PATENT ABSTRACTS OF JAPAN vol. 005, no. 100 (P-068), 27 juin 1981 (1981-06-27) -& JP 56 044128 A (MATSUSHITA ELECTRIC IND CO LTD), 23 avril 1981 (1981-04-23)

## Description

La présente invention concerne le domaine de la lecture des supports sonores, et en particulier des disques phonographiques analogiques.

Habituellement, la lecture de tels disques est réalisée à l'aide d'un tourne-disque ou un « pick-up », voire un gramophone, comportant une cellule de lecture mécanique munie d'une aiguille ou d'une pointe suivant le profil du sillon de gravure.

Pendant plus d'un siècle, depuis l'apparition du phonographe vers 1880 et jusqu'à celle des bandes magnétiques et des supports électroniques ou électro-optiques, le seul moyen d'enregistrement sonore était le disque à gravure mécanique. Une grande partie du patrimoine audio mondial se trouve ainsi conservée sur des disques 16 tours, 78 tours, 45 tours et 33 tours, et, pour la plus ancienne, sur des cylindres enduits de cire. Afin de permettre l'exploitation de ces précieuses archives, il est apparu nécessaire de trouver des solutions de lecture moins agressives que les cellules mécaniques.

Le projet 21-64984.01« VISUAL AUDITOR » de la Fondation Gebert Rüf et de la Phonothèque Nationale Suisse à Lugano a permis l'élaboration d'une solution de lecture optique sans contact, consistant à procéder à une prise de vue globale de l'image pour archiver une image des disques sous forme de film photographique.

Un lecteur électro-optico-mécanique comprenant un plateau de verre monté sur un moteur rotatif est utilisé pour procédé à une digitalisation de l'image par une caméra CCD linéaire fixe de 2048 pixels de large, qui prend des images à intervalles réguliers (avec des fréquences variant de 25 000 à 200 000 lignes par tour de rotation du disque). Cette caméra, combinée avec la rotation du film sur le plateau de verre, effectue un scanner rotatif et fournit une image rectangulaire d'un anneau du disque. Un autre moteur procède ensuite au déplacement radial du disque afin de passer à l'acquisition de l'anneau suivant.

Une fois digitalisée, l'image des sillons est traitée et analysée afin de déterminer la position et les déplacements du sillon. Une première étape consiste à corriger les imperfections de l'image acquise. Des perturbations de l'image peuvent en effet provenir des diverses étapes du processus d'acquisition: le disque lui-même (fissure, griffure, poussière, ...), de la photo ou du scan (poussière, optique, capteurs CCD défaillants, ...).

Ensuite, la position du sillon est estimée à l'aide d'un simple seuillage ou d'une méthode plus élaborée.

Le déplacement du sillon est ainsi transformé en signal sonore. Ce signal est encore traité par des filtres passe-bande afin de ne restituer que la bande passante de l'enregistrement original. Certaines pondérations fréquentielles peuvent y être encore appliquées, conformément au type d'enregistrement original (par exemple: courbe d'égalisation RIAA).

Cette solution connue nécessite toutefois un ensemble d'équipements relativement complexes, et des manipulations multiples peu compatibles avec la numérisation en série d'un fond d'archives sonores pouvant contenir plusieurs dizaines de milliers de disques ou de supports à traiter. Cette technique est sensible aux irrégularités de la surface du disque, sans effet lors de l'audition avec un tourne-disque traditionnel, peuvent influencer la qualité du son extrait par cette solution de l'art antérieur.

Le défaut principal de ce système est toutefois la limitation fondamentale dans la mesure de la position de la frontière du sillon. En effet, cette frontière située en surface du disque peut être définie imparfaitement. La zone de profondeur intermédiaire est souvent plus informative. D'autre part, il est souhaitable de mesurer sur une surface et non sur une courbe afin de limiter les erreurs.

D'autre part, le signal audio étant codé comme un changement de la direction du sillon, il faut être capable de mesurer de très faibles déplacements. Un système optique qui n'est sensible qu'à la position de la frontière sera naturellement limité par la limite de résolution de l'optique.

On connaît également le brevet américain US4504934 décrivant un équipement de restitution optique du signal par l'analyse du faisceau réfléchi par les parois du sillon du disque.

Ce brevet décrit un système à base de laser qui utilise un faisceau laser balayant la surface d'une lentille. Le rayon lumineux convergeant en un point unique du sillon, n'est renvoyé vers sa direction initiale qu'à un instant donné. La mesure de cet instant précis donne accès à l'angle du miroir que constitue le sillon.

Le brevet européen EP0247810B1 décrit un système optique à plateau tournant, destiné à la lecture d'un disque phonographique ayant un signal enregistré dans un sillon comprenant :
une unité optique comportant une source optique formant un premier faisceau lumineux tombant afin qu'il forme une tache lumineuse sur la première paroi et un faisceau réfléchi par la paroi formant une tache lumineuse réfléchie à une position de tache proportionnellement au signal enregistré,
un capteur optique destiné à détecter la position de la tache lumineuse réfléchie et à former un signal de sortie proportionnel au signal enregistré, un ensemble de poursuite destiné à provoquer la poursuite du sillon par le faisceau lumineux lorsque le disque tourne,
et un ensemble d'entraînement destiné à déplacer le disque par rapport à l'unité optique.

L'ensemble de poursuite comprend une unité tangentielle ayant un dispositif détecteur tangentiel destiné à détecter la variation de la direction d'une tangente à la gorge et à former un signal d'erreur tangentiel en fonction de cette variation, et ayant un dispositif d'asservissement tangentiel commandé par le signal d'erreur tangentielle et destiné à suivre de cette manière le faisceau lumineux perpendiculaire à la tangente à la gorge.

Ces solutions impliquent un asservissement complexe de la cellule de lecture par rapport au sillon du disque ou du support analysé.

On connaît également le brevet américain US 3,452,163 qui décrit un équipement selon le préambule de la revendication 1.

On connaît également le document US 4,972,344 qui décrit un équipement pour la lecture optique d'un disque phonographique ayant un signal enregistré dans un sillon formé par une paroi ayant une position modulée par le signal enregistré. L'équipement comprend également une unité optique ayant une source optique fournissant un premier rayon lumineux incident sur la paroi pour fournir un point réfléchi à une position réfléchie proportionnelle au signal réfléchi. Il comprend également un capteur optique pour capter la position réfléchie du point réfléchi et fournir un signal de sortie proportionnel au signal enregistré. L'unité optique comprend également un ensemble de suivi qui permet de positionner l'unité optique au niveau de la section du sillon à suivre lorsque le disque tourne.

On connaît également l'abrégé de la demande japonaise 560444128 qui décrit également un équipement pour la lecture optique d'un disque phonographique ayant un signal enregistré dans un sillon formé par une paroi ayant une position modulée par le signal enregistré. L'équipement comprend deux photodétecteurs permettant de détecter les modulations de la paroi du sillon et de reproduire le signal enregistré.

Les équipements décrits dans ces trois derniers documents ne permettent pas d'obtenir une bonne résolution dans les mesures de déplacement du sillon et impliquent un asservissement complexe de la cellule de lecture par rapport au sillon du support.

L'invention vise à remédier à ces différents inconvénients en proposant un équipement selon la revendication 1.

De préférence, pour un disque ledit spectre varie dans un secteur angulaire placé sur dans un plan supporté dans un plan de variation des normales locales d'un des flancs du sillon.

Avantageusement, afin de coder séquentiellement les couleurs et/ou l'intensité de la lumière, ledit spectre est en outre variable discrètement en fonction du temps.

Selon un exemple simple de réalisation, lesdits moyens de génération d'au moins un faisceau lumineux comprennent au moins un filtre, de préférence trichrome apte à générer ledit spectre.

Selon un mode de réalisation particulier, les moyens de génération comprennent une source lumineuse blanche éclairant une zone du support sonore comprenant plusieurs segments du sillon à travers un filtre coloré présentant une variation de couleur dans une direction perpendiculaire à l'axe optique du faisceau incident et parallèle au plan du disque.

Avantageusement, on utilise également un condenseur pour focaliser ledit au moins un faisceau lumineux sur la surface du support sonore sous la forme d'une tâche lumineuse s'étendant sur plusieurs tronçons de sillons.

Selon différents modes de réalisation, ledit condenseur est constitué par deux lentilles asphériques, un miroir et une lentille, ou deux miroirs.

De préférence, ledit au moins un faisceau lumineux forme un angle d'environ 45° avec la surface du support sonore, dans un plan passant par l'axe de rotation du disque.

De façon avantageuse, le système optique comprend un miroir pour renvoyer le faisceau réfléchi vers ledit capteur d'image, pouvant être une caméra couleur bidimensionnelle ou monodimensionnelle.

Afin de décoder le signal lumineux reçu, l'équipement comprend en outre un calculateur relié à la sortie dudit capteur d'image pour assurer le décodage de ladite image et effectuer par un traitement d'image la restitution de la vitesse de déplacement radiale de la zone du support sonore en fonction du spectre de la lumière réfléchie par ladite zone.

L'invention sera mieux comprise à la lecture de la description qui suit, se référant aux dessins annexés correspondant à un exemple non limitatif de réalisation, où :
- la figure 1 représente une vue schématique de l'équipement selon l'invention, vue suivant la direction générale des sillons,
- la figure 2 représente une vue schématique de l'équipement vue dans un plan parallèle à l'axe optique d'éclairage et à la direction générale des sillons,
- la figure 3 représente une vue du tracé des rayons dans une réalisation avec un condenseur composé de deux lentilles, projetant l'image d'une source verticale sur un disque horizontal, avec un angle d'incidence de 45 degrés, en se limitant à la partie utile des lentilles.
- la figure 4 représente une vue de la surface du support sonore obtenue par le dispositif à condenseurs à lentilles.
- la figure 5 représente une vue schématique du tracé des rayons dans une réalisation avec un condenseur composé de deux miroirs paraboliques et d'un miroir plan, projetant l'image d'une source verticale sur un disque horizontal, avec un angle d'incidence de 45 degrés, en se limitant à la partie utile.
   La partie correspondant au miroir de reprise, à l'objectif de prise de vue et à la caméra n'est pas représenté, étant identique à la précédente.
- la figure 6 représente une vue en perspective du même montage à condenseur à miroirs.

L'équipement est destiné à la lecture de disques phonographiques présentant une gravure formée latéralement, avec des variations de la position du flanc par rapport à une position de référence dépendant du signal électrique qui commandait le burin de gravure. Le sillon présente une déviation radiale dont la vitesse est proportionnelle au niveau du signal électrique d'enregistrement. La combinaison des vitesses tangentielles de rotation du disque et de la vitesse radiale de l'organe de gravure détermine un angle local du sillon. Pour simplifier, si l'on se limite à mesurer la position du sillon sur un axe horizontal qui part du centre du disque, cette position se déplace continûment pour suivre la spirale, avec de petites variations qui codent pour le signal sonore.

La tangente de l'angle d'un sillon avec cet axe horizontal va donc varier en proportion du signal sonore inscrit sur le disque. La mesure de cet angle en éclairant une des faces du sillon qui se comporte comme un miroir, à travers une lumière structurée, permet à l'équipement selon l'invention de restituer l'information sonore gravée par le burin mécanique.

L'invention consiste à coder la lumière incidente par des couleurs, de manière à ce que chaque point de l'image du sillon présente une couleur qui soit fonction de la couleur du rayon incident réfléchi par le flanc du sillon. Cette couleur ne dépendra que de l'angle du flan du sillon avec la direction d'un rayon venant du centre du disque.

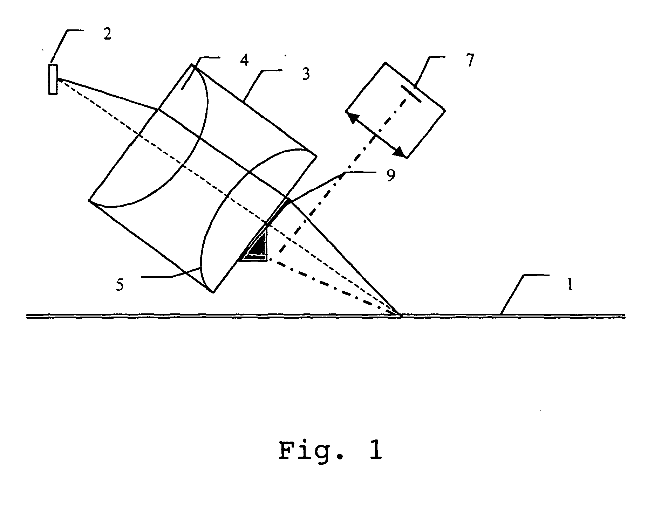

La figure 1 représente un exemple de réalisation. Le disque (1) est placé sous une tête optique comprenant une diode électroluminescente blanche (2) émettant un faisceau lumineux traversant un système optique (3). Ce système optique (3) est formé par deux lentilles asphériques (4, 5) d'un diamètre de 75 millimètres et d'une focale de 50 millimètres, formant un condenseur. Cette ouverture numérique importante est déterminante dans la dynamique maximale qu'il sera possible de décoder depuis le disque.

Ce système optique permet de projeter sur la surface du disque une tache lumineuse selon un axe d'incidence d'environ 45°. Cette tache est déterminée pour recouvrir plusieurs tronçons de sillons. Le diamètre de la tache est compris entre 5 et 10 millimètres.

Les limites de profondeur de champ du système optique basculé sont calculées selon la règle de Scheimpflug, ce qui conduit à disposer la source lumineuse verticalement, le condenseur (symétrique) à 45°, le disque étant horizontal.

Le faisceau incident est codé en couleur par un filtre optique (9) placé sur le chemin optique incident. Ce filtre optique présente une variation de couleur continue ou discrète, selon la direction générale des sillons. Ce filtre est préférentiellement conçu pour présenter une variation continue de la teinte selon le modèle HSI (Teinte, Saturation, Intensité).

Ce filtre est dans cet exemple réalisé au moyen d'une imprimante à sublimation de colorant sur transparent, de modèle Kodak KDS 8670 Dye Sublimation Printer.

Le faisceau codé est réfléchi par les flancs des sillons présents dans la tache lumineuse formée sur le disque, et renvoyé par un miroir de reprise (8) vers une caméra CCD(7) dont l'objectif est focalisé sur le plan du disque.

Le capteur est dans cet exemple un capteur SONY HAD (nom commercial) présentant une résolution 640x480, associé à un objectif f1,8/50. L'objectif est diaphragmé de manière à projeter sur le capteur une image suffisamment nette. La sortie vidéo est connectée à un ordinateur par un lien IEEE1394 non compressé, avec une dynamique de 8 bits.

Le capteur d'image est associé à un objectif, l'ensemble formant un système de captation.

La netteté de l'image peut être assurée avec un diaphragme plus ouvert grâce à l'application de la règle de Scheimpflug dans lequel le plan de l'optique, le plan du capteur et le plan du disque se coupent en une droite unique. Ce principe n'est bien sûr applicable que si le capteur est compatible avec l'incidence des rayons.

Dans cet exemple, le support est déplacé périodiquement pour procéder à l'acquisition de l'ensemble de la surface, par le biais d'une platine en rotation pilotée par un ordinateur, placée elle-même sur un autre platine en translation.

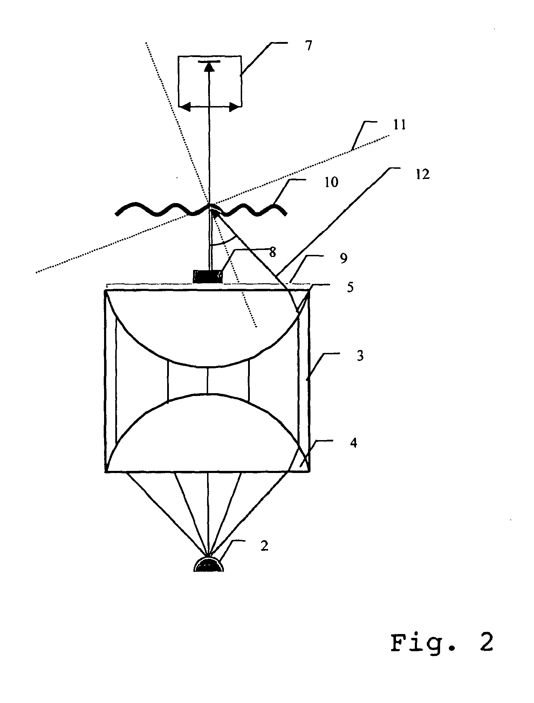

La figure 2 représente le même exemple de réalisation vu de dessus à 45 degrés, dans un plan parallèle à l'axe optique de l'éclairage et à la direction générale des sillons. Pour aider à la compréhension, la caméra et son objectif sont représentés de côté sur le schéma, et non de dos. Cette figure visualise le rayon (12) coloré par le filtre (9), se réfléchissant sur un flan de sillon (10) dont la direction est représentée par la tangente (11), revenant sur le miroir de reprise (8) qui va le renvoyer vers la caméra (7), comprenant un objectif et un capteur CCD.

Seul ce rayon particulier sera sélectionné par le sillon à cet endroit déterminé. Une autre orientation locale du sillon aurait réfléchi un autre rayon, d'une couleur différente, provenant d'un autre endroit du masque coloré (9).

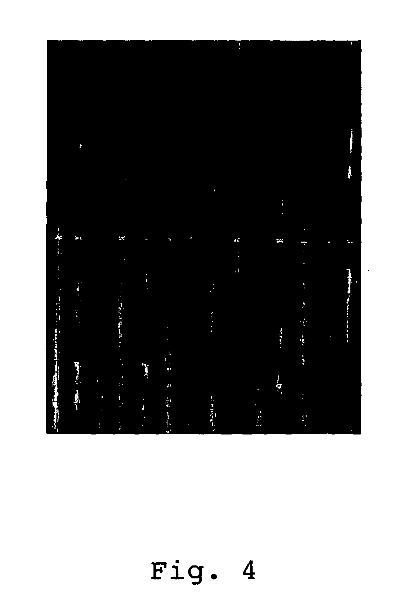

L'image obtenue est représentée en figure 4. La couleur code directement pour la direction locale du sillon, avec par exemple du jaune pour un déplacement dans un sens, et du bleu pour un déplacement dans l'autre sens. Le filtre coloré (9) présente ici une variation chromatique continue, le vert correspond à la position médiane de référence.

Il est bien sur possible de réaliser des filtres avec une variation angulaire plus ou moins rapide de la couleur.

L'écart entre les sillons est de l'ordre de 300 microns, et les détails verticaux les plus petits sont de l'ordre de 50 microns. Le disque se déplaçant avec une vitesse de l'ordre d'un mètre par seconde en périphérie, l'échantillonnage possible est de l'ordre de 20000 par seconde, soit une fréquence de coupure de l'ordre de 10 kHz.

Le décodage de l'image colorée ainsi réalisée est effectué par un traitement d'image conduisant à restituer la vitesse de déplacement radial en fonction de la teinte du sillon.

Après filtrage spatial pour réduire le bruit, l'analyse colorimétrique en tout point du sillon par ce même modèle donne la teinte, qui elle-même permet de déduire la vitesse de déplacement radial.

On tient compte de la position du filtre (9) sur le trajet optique lors de cette conversion, ce qui conduit à retrouver l'angle d'incidence selon une formule qui dépend de la position du point imagé, et de la position sur le filtre.

Le logiciel suit la piste d'un sillon et décode le sillon sur une fraction de la circonférence.

Dans cet exemple, les images sont obtenues au moyen d'une caméra bidimensionnelle, le signal sonore obtenu est fusionné avec celui obtenu lors des images précédentes, en tenant compte du déplacement angulaire entre les images.

Dans une autre implémentation, le déplacement en rotation peut être continu, de manière à permettre une acquisition par une caméra ligne (monodimensionelle), qui capturera alors une couronne du disque en une rotation de la platine.

Le signal est re-échantillonné pour tenir compte de la vitesse tangentielle différente au centre et à la périphérie du disque, puis passé par un filtre de restitution pour corriger l'effet de la pré-accentuation RIAA ou autre.

Une atténuation en luminance du signal pourra être interprétée comme une occlusion du faisceau lumineux au niveau du sillon, due à une poussière ou une rayure, par exemple.

Le logiciel détecte de telles perturbations, et en conserve la position, permettant ainsi une restauration ultérieure par interpolation des parties manquantes.

L'invention décrite ci-dessus en détail concerne un équipement pour la lecture optique d'un support sonores présentant une gravure d'un sillon, comprenant des moyens de génération d'au moins un faisceau lumineux présentant une variation de spectre lumineux en fonction de son angle d'incidence sur une zone du support sonore et un capteur d'image disposé pour recueillir la lumière réfléchie par ladite zone du support sonore.

L'invention utilise donc avantageusement la déflectometrie pour identifier la géométrie locale d'un flanc de sillon de disque. En attribuant à chaque direction incidente une sorte de code (coloré ou autre) différent, on pourra retrouver sur les images enregistrées des informations permettant de calculer sur le pixel considéré l'angle de la normale de ce flanc avec un plan vertical passant par le centre du disque.

On peut mesurer ces angles non pas sur un point particulier de réception d'un rayon laser localisé, mais sur une zone étendue du disque. Ainsi un suivi de sillon est rendu inutile, ou plutôt est reporté à la phase d'analyse des images recueillies. L'avantage du procédé est particulièrement évident dans le traitement des disques fragmentés, ou du fait de la rétraction du vernis et l'apparition de fractures, les sillons ne se suivent plus de part et d'autre de la fracture, et interdisent donc un suivi simple.

D'autre part, une collecte d'information surfacique permet de mesurer le flanc du sillon à diverses hauteurs, et donc de détecter plus aisément les poussières et les déformations dues à une précédente lecture mécanique.

Ces informations peuvent être un codage coloré: dans la mesure où le faisceau réfléchi ne change pas de teinte lors de sa réflexion, le code sera conservé, la seule influence de la réflexion portant sur la quantité de lumière transmise, du fait de la présence d'éléments parasites telles que des poussières qui peuvent obscurcir le faisceau.

D'autre part, au lieu d'éclairer le disque par un faisceau coloré unique en un temps unique, on pourra procéder par des étapes en nombre arbitraire, en changeant le filtre entre ces étapes.

Ainsi, le codage simultané de trois canaux obtenu par le filtre coloré pourra être rendu séquentiel, avec l'avantage de pouvoir augmenter facilement le nombre de canaux, de diminuer l'effet des aberrations chromatiques de l'optique, et de permettre ainsi une précision meilleure de numérisation du signal audio, sous réserve d'un bon repositionement du disque sous le dispositif.

En réalité seuls deux filtres suffisent pour coder l'orientation d'un rayon lumineux qui peut subir une atténuation arbitraire par le disque réfléchissant : dans un exemple particulier un filtre sera uniforme, et l'autre présentera une variation monotone de la densité. La combinaison des images distinctes obtenues à l'aide de ces deux filtres permettra au calculateur de déterminer l'orientation de l'élément réflecteur, en calculant un ratio, invariant par la réflectivité.

Ainsi, on pourra passer d'un filtre coloré suivant trois composantes RVB, à deux ou trois filtres monochromes utilisés séquentiellement, ou même à plus de trois filtres.

Les filtres complémentaires peuvent être utilisés pour augmenter la précision de mesure en présentant un profil de variation angulaire variant plus rapidement, et en répétant ce profil périodiquement. L'ambiguïté de la mesure est alors levée par les mesures précédentes.

L'intégration de toutes les images obtenues par des filtres divers par le calculateur permettra d'obtenir une précision améliorée. On verra par la suite une généralisation de ce formalisme à plusieurs mesures par filtres et à plusieurs filtres.

Plus précisément, les filtres réalisés à l'aide d'une imprimante CMJ (cyan magenta jaune) à codage soustractif peuvent présenter sur chaque élément localisé trois degrés de liberté distincts, correspondant à la quantité de colorant appliqué localement.

L'analyse de la couleur résultante par une caméra trichrome RVB permet de remonter aux valeurs initiales de C,M et J au travers d'une matrice de calibration qui dépend du spectre de l'éclairage, de la sensibilité de la caméra dans chaque canal RVB, et du spectre d'absorption des colorants C,M et J.

Plus généralement, un filtre composite, par exemple produit de la superposition de deux filtres colorés produits avec des colorants différents, pourra présenter plus de trois degrés de liberté.

On pourra accéder à la mesure de ces couleurs étendues, ou degrés de liberté complémentaires par le biais d'une caméra multispectrale, ou plus simplement par l'application de filtres séparateurs successifs placés devant une caméra noir et blanc. Par exemple, le choix de sources lumineuses avec des spectres différents d'émission peut également permettre de mesurer les n degrés de liberté d'un point du filtre. Mesurer les degrés de liberté initiaux revient à retrouver la quantité de colorant d'un certain type présent à une certaine position du filtre. La mesure de ces degrés de liberté permet de retrouver la position d'intersection du rayon lumineux avec le filtre. La position sur le filtre est reliée de façon unique à l'angle d'incidence des rayons d'éclairage mesurés par l'objectif, et donc à la géométrie locale du sillon sur le disque, et donc au signal enregistré.

Plus généralement, chaque mesure par une caméra NB, Rouge-vert-bleu (RVB), multispectrale ou par changement de lumière obtiendra une mesure de 1,3 ou n degrés de liberté. On passe de l'espace des mesures à celui des degrés de liberté par une transformation linéaire, si l'on suppose que la mesure est elle même rendue linéaire par rapport à l'intensité d'éclairement reçue dans sa bande de longueur d'onde.

Le passage de plusieurs (p) filtres différents peut multiplier ces degrés de liberté par p.

L'ensemble de ces n x p degrés de liberté mesurés est alors exploité pour retrouver l'angle précis d'incidence du faisceau, en tenant compte des réductions d'intensité arbitraire provoquées par les poussières. La normalisation d'intensité consiste à calculer, à partir des mesures converties en degrés de liberté, un vecteur rendu invariant par rapport au coefficient de reflectivité de la surface et à l'efficacité générale de l'optique d'éclairage pour un angle d'incidence déterminé.

Cette normalisation d'intensité dépend du type de codage adopté: on pourra par exemple normaliser par un premier degré de liberté qui aura une valeur constante affectée par la réflectivité et les autres éléments parasites, ou rendre la norme du vecteur des degrés de liberté unitaire, ou même choisir un sous ensemble de degrés de liberté ayant une norme unitaire. Le type de normalisation dépend du type d'éclairement choisi : il s'agit de séparer la mesure de la réflectivité des autres degrés de liberté mesurés.

La normalisation d'intensité va projeter un point d'un espace de mesure de nxp dimensions, vers une hypersurface de n x p - 1 dimensions plongée dans cet espace, tel que tous les points de mesure affectés par une même variation d'intensité de réflexion se retrouvent sur la même projection. Lors de cette normalisation, on conserve l'intensité de la lumière reçue pour l'utiliser comme indice de perte de signal pour une interpolation ultérieure.

Après normalisation, les degrés de liberté résiduels n x p - 1 sont utilisés pour retrouver l'angle d'incidence alpha du faisceau optique, dans le plan d'incidence à 45 degrés.

Chaque angle alpha correspond à un point distinct sur une courbe évoluant dans l'espace des degrés de liberté complets, sur l'hypersurface des degrés de liberté normalisés par l'intensité lumineuse.

Cette courbe peut être éventuellement discontinue par morceaux, ou suivre un parcours continu préférentiellement.

Les approches de type grossier vers fin (coarse to fine en langue anglaise), pyramidales, les codages de type hiérarchiques, Peano, Hilbert ou code de Gray peuvent être vues comme des versions particulières correspondant à des courbes différentes.

Identifier la position sur la courbe à partir des mesures des degrés de liberté est un problème plus ou moins difficile suivant le codage choisi et donc la forme de la courbe.

Une exemple simple de cette approche générale réduit au cas d'un seul filtre trichrome, peut être une courbe parcourant l'espace de mesure RVB à intensité constante, laissant donc libre la teinte et la saturation. Le filtre lui-même est imprimé en CMJ. Lors de la lecture de l'image, une mesure RVB par la caméra est convertie vers l'espace CMJ des colorants du filtre en tenant compte d'une matrice linéaire de calibration, puis dans dans un modèle teinte, saturation (T,S,I), et intensité, puis ensuite vers la position sur la courbe. L'intensité est ignorée, ce qui correspond à rendre invariant par rapport à la réflectivité variable du support (étape de normalisation).

A intensité constante I, (T,S) se retrouve sur une surface dans l'espace des degrés de liberté CMJ.

Dans l'espace (T,S) on pourra dessiner une courbe paramétrée par u, (T(u),S(u)), en préservant des marges de sécurité qui dépendent de la qualité de la caméra d'acquisition et de son rapport signal à bruit dans chaque composante R,V et B. Cette courbe pourra être plus complexe qu'une simple variation de la teinte T, et pourra comprendre une variation de la saturation S.

Le filtre coloré sera imprimé dans cet exemple comme la résultante par la fonction une variation monotone du paramètre u le long de son grand axe, en convertissant T(u) et S(u) en une densité de colorant C,M et J variable suivant u.

Le problème du décodage, après normalisation des mesures ramenées dans l'espace des degrés de liberté, se ramène à retrouver la valeur du paramètre u qui donne les degré de liberté les plus proches des valeurs normalisées par l'intensité, u étant en relation directe avec la position sur le filtre et donc avec l'orientation du faisceau lumineux recueilli sur le disque.

L'ordre de changement des filtres colorés modulant les spectres angulairement, de changement des filtres placés devant une caméra monochrome, de changement de la source de lumière est arbitraire, si chaque image est enregistrée sur l'ordinateur, et disponible pour un traitement postérieur.

De même, le déplacement en rotation de la platine, celui dans la direction radiale peut librement être choisi, et entrelacé avec l'ordre de changement de l'éclairage et de la mesure des spectres.

On pourra toutefois faire l'économie d'un dispositif de mesure précise de la rotation du disque en recalant les images obtenues par un filtre avec les images obtenues avec un autre, en supposant que ces deux images ne sont pas statistiquement indépendantes, ce qui est obtenue par exemple par le choix de degrés de liberté communs.

Le changement de filtre pour obtenir des degrés de liberté complémentaires pourra être obtenu par un dispositif mécanique, ou par l'usage d'un modulateur de lumière piloté par le calculateur, tel que des micro-miroirs DLP de Texas Instruments, des éléments à cristaux liquides ou tout autre dispositif de modulation spatiale de lumière remplaçant les filtres.

D'autres moyens modifiant le spectre de la lumière projetée sur le disque suivant l'angle d'incidence peuvent être envisagés comme des réseaux de diffraction ou des prismes. Un faisceau divergent de longueurs d'ondes variant continûment provenant d'un réseau ou d'un prisme pourra être rendu convergent sur la partie de disque éclairé par u élément d'optique convergent.

Le condenseur pourra être remplacé par un projecteur vidéo commercialement disponible, suivi d'un élément d'optique rendant convergent le faisceau vers le disque.

Par ailleurs, selon l'invention, on utilise de préférence un condenseur afin de produire, sur le disque, un faisceau incident suivant un angle de 45 degrés avec la normale du disque, afin d'être réfléchi par un flanc du sillon vers l'objectif.

Dans la direction du codage par le ou les filtres, l'ouverture angulaire doit être la plus grande possible. Le faisceau de lumière structuré doit donc avoir la forme de secteurs angulaires dont le sommet principal illumine un point du disque, la base provenant du condenseur, ces secteurs étant disposés sur des plans à 45 degrés par rapport au plan du disque. Le codage coloré ou la variation structurée de lumière intervient suivant l'angle inscrit dans ces secteurs.

Une réalisation à l'aide d'un condenseur réfractif ou réflectif à symétrie circulaire est une approximation de la distribution d'éclairage souhaitée, dans la mesure ou les rayons ne seront pas sur des plans parallèles, mais convergeront depuis la pupille de sortie de la dernière lentille/miroir du condenseur, obturée de façon adéquate. C'est la taille relative du petit axe par rapport au grand axe de la pupille de sortie qui détermine la forme angulaire du faisceau de rayons qui éclaire le disque.

Le principe de Scheimpflug permet d'assurer la convergence des rayons sur le plan incliné du disque (ici à approximativement 45 degrés). Une réalisation symétrique du condenseur permet de limiter certaines aberrations.

On peut réaliser une version à base de miroirs ou catadioptrique du condenseur à l'aide de miroirs sphériques, paraboliques ou asphériques au sens général, une ou deux lentilles étant remplacée par un miroir.

L'avantage d'une réalisation uniquement à base de miroirs est la suppression plus facile des aberrations chromatiques.

Dans le cas d'une réalisation à base de miroirs, pour éviter de placer la source lumineuse sur le trajet retour du miroir, l'éclairage du disque peut se faire également par l'usage d'un miroir hors-axe (« off-axis » en langue anglaise), c'est à dire une étroite bande rectangulaire découpée dans un miroir parabolique, en s'éloignant de l'axe optique ce miroir.

Le grand axe de ce rectangle couvre la totalité de la pupille de sortie. Le petit axe est déterminé par la contrainte de faire réfléchir tous les rayons de la source suivant un intervalle d'angle limité sur le sillon, dans la direction orthogonale à celle du codage du son.

Dans un tel montage, le disque sera éclairé au foyer du second miroir, celui-ci recevant un faisceau parallèle du premier, lui même éclairé par la source à son foyer.

Les deux foyers sont déplacés de par et d'autre de l'axe joignant les deux miroirs, par l'usage de miroirs de type hors axe.

Un tel montage n'est utilisable que pour un élément de disque isolé, puisque l'axe entre les deux miroirs concavités face à face passe par le disque, et est donc obscurci par celui-ci. Dans le cas d'un disque réel, on replie le montage par l'intermédiaire d'un miroir plan placé près de la surface du disque, ce qui évite donc à la lumière de traverser le plan du disque.

On peut noter que la lumière sur ce schéma n'arrive pas parfaitement sous la forme d'un secteur angulaire sur le plan d'incidence. La déviation par rapport au plan augmente en fonction de l'ouverture du miroir, et de la distance de la partie des miroirs paraboliques avec l'axe de ceux-ci. On pourra diminuer cet effet en remplaçant les miroirs paraboliques par leur analogue sous la forme de miroirs de Fresnel, leur forme macroscopique étant plane alors qu'il présentent des détails microscopiques qui orientent le lumière vers le foyer de la parabole.

La source de lumière étendue sera orientée pour satisfaire aux conditions de Scheimpflug et focaliser une image par des rayons arrivant avec une incidence de 45 degrés sur le disque. Ceci correspond à une source dans le plan vertical.

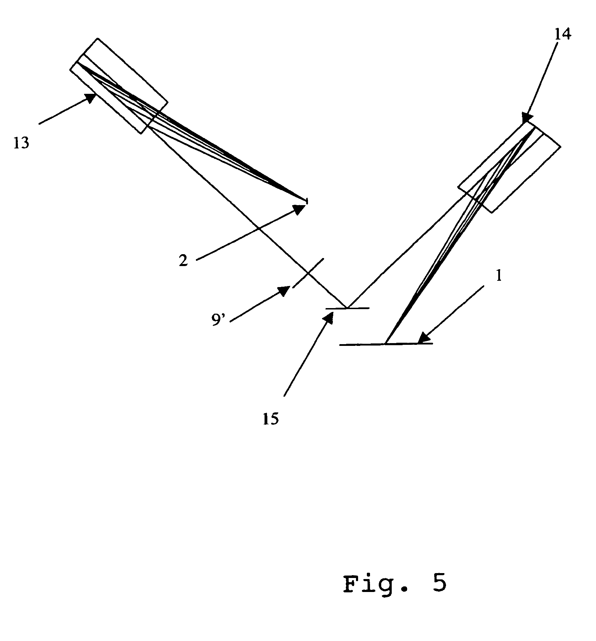

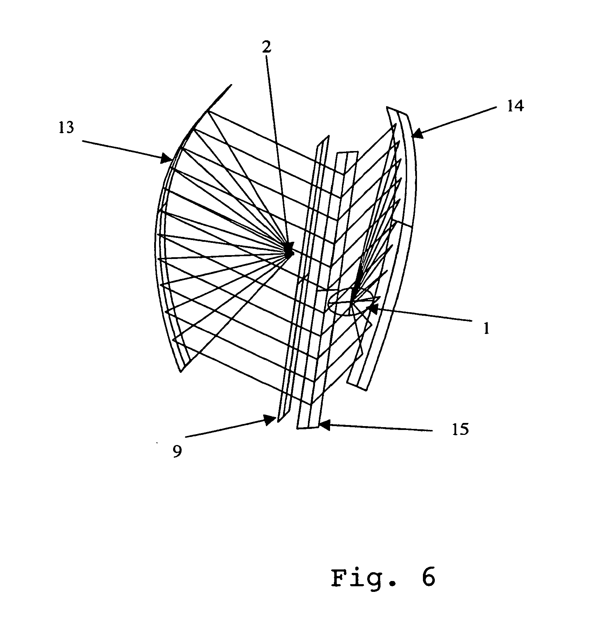

Les figures 5 et 6 représentent une réalisation d'un condenseur au moyen de deux miroirs paraboliques (13) et (14), réduits à une fenêtre étroite suivant un petit axe, et large suivant un grand axe portant le codage de la lumière structurée, ainsi que d'un miroir plan (15), et d'un filtre coloré (9').

La figure 5 est une vue du condenseur depuis un point de vue horizontal à hauteur du disque, le disque étant horizontal. Les parties de miroir paraboliques (13) et (14) sont vues de coté sur cette figure.

La figure 6 est une vue du condenseur en perspective cavalière, l'observateur étant placé légèrement en hauteur et du coté du disque (1).

On distingue les concavités des miroirs paraboliques (13) et (14) sur cette figure.

Ces parties de miroir parabolique sont obtenues par une découpe hors-axe du miroir dans le sens du petit axe de la fenêtre rectangulaire. Ainsi, un rayon partant du foyer où sera placé une source de lumière (2) se réfléchira sous la forme d'une nappe parallèle, sans rencontrer la source de lumière lors de son trajet après réflexion.

La nappe de rayons rencontre alors un miroir plan rectangulaire (15), de forme similaire au filtre coloré, placé au dessus du disque et parallèle à celui-ci. Ce miroir plan va réfléchir la lumière vers le second miroir parabolique (14). Pour une source ponctuelle au centre de l'axe optique, les miroirs paraboliques peuvent être à une distance arbitraire l'un de l'autre.

Le masque coloré (9') est placé sur l'axe optique, préférentiellement à égale distance des miroirs (13) et (14)

La nappe de rayons est ensuite reprise par un élément de miroir parabolique hors axe (14), qui la fait reconverger sur le point que l'on veut éclairer sur le disque (1), au foyer de cette seconde parabole.

On peut également faire éviter l'usage de miroirs de type hors-axe en faisant tourner légèrement chaque miroir face à face. Un montage dit en Z, permettant de compenser les aberrations de coma, est connu dans l'état de l'art des systèmes de type Schlieren tel que décrits par exemple dans la publication « Schlieren et Shadowgraph Techniques, G.S. Settles, ISBN : 3540661557 ».

Dans les deux cas réflecteur et réfracteur, seule une fine bande rectangulaire de la pupille de sortie du condenseur est utile. L'élimination de la partie excédentaire permet de placer le condenseur au plus prés du disque, et donc d'avoir l'ouverture numérique la plus forte dans la direction de modulation (le grand axe de la pupille rectangulaire).

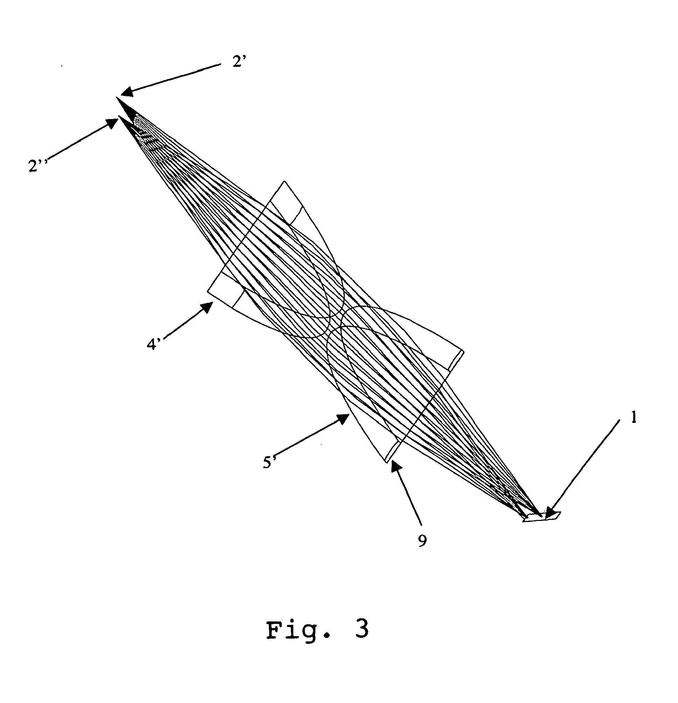

La figure 3 présente un tracé des rayons du condenseur réfracteur de la figure 1 réduit à sa partie utile. Le disque (1) est placé sous une tête optique comprenant une diode électroluminescente blanche (2) émettant un faisceau lumineux traversant un système optique (3). Ce système optique (3) est formé par deux lentilles asphériques (4, 5) formant un condenseur.

Deux points distincts (2') et (2'') de la source sont ici représentés pour illustrer le principe de Scheimpflug.

Le filtre coloré placé ici sous la dernière lentille est un rectangle. Dans la direction du petit coté, la couleur est constante. Dans la direction du grand coté, la couleur présente une variation.

Un condenseur de microscope classique ne présente pas la géométrie de type Scheimpflug, ni cette asymétrie d'ouverture numérique. Par ailleurs, le diamètre de l'objectif d'un objectif de microscope avec une ouverture numérique suffisante dans la direction de modulation, utilisé comme condenseur, interdit de l'incliner de 45 degrés. Le condenseur spécialisé selon l'invention présente un faible petit axe, et peut donc être incliné à 45 degrés.

Un condenseur formé de deux lentilles ou deux miroirs pourra être remplacé, au prix d'une ouverture numérique plus faible, par une seule lentille ou miroir.

Dans une variante de réalisation, une qualité optique suffisante du condenseur permettra de l'utiliser également pour la capture coaxiale du faisceau réfléchi, en limitant l'ouverture numérique de l'objectif de la caméra de capture d'images à la zone centrale. On pourra alors utiliser alors une lame séparatrice semi-transparente pour séparer le faisceau aller éclairant le disque, et le faisceau retour vers la caméra, cette lame séparatrice étant placée après le filtre coloré dans le sens venant de la source d'éclairage. Le filtre coloré dans le cas réfracteur avec lame séparatrice sera donc placé dans l'intervalle entre les deux lentilles, avant la lame séparatrice. L'objectif de prise de vue sera donc composé de la surface réflective ou réfractive utilisée par le condenseur, et d'une autre surface secondaire choisie pour limiter les aberrations. Le dernier miroir ou élément réfracteur sera commun au condenseur ou à l'optique de prise de vue. On évitera ainsi l'usage d'un miroir de reprise (8).

Ce miroir de reprise peut également être supprimé dans un montage sans lame semi-réfléchissante si la taille physique de la pupille de sortie du condenseur et les limitations mécaniques du système permettent une vue directe de la zone du disque imagé, suivant une incidence symétrique au faisceau d'éclairage par rapport au plan de variation de la normale du flanc choisi du sillon. La caméra se placera donc dans l'axe, sans réflexion par le miroir de reprise, avec un angle proche de 45 degrés par rapport à la surface du disque.

## Revendications

1. - Equipement pour la lecture optique d'un support sonore (1) présentant une gravure d'un sillon, comprenant des moyens de génération (3, 9) d'au moins un faisceau lumineux apte à être réfléchi par une zone dudit support sonore et un capteur d'image (7) disposé pour recueillir la lumière réfléchie par ladite zone du support sonore, **caractérisé en ce que** ledit faisceau lumineux présente une variation de spectre lumineux en fonction de son angle d'incidence sur ladite zone du support sonore.

2. - Equipement pour la lecture optique d'un support sonore selon la revendication 1, **caractérisé en ce que** ledit spectre varie dans un secteur angulaire placé dans un plan de variation des normales locales d'un des flancs du sillon.

3. - Equipement pour la lecture optique d'un support sonore selon la revendication 1, **caractérisé en ce que** ledit spectre est en outre variable discrètement en fonction du temps.

4. - Equipement pour la lecture optique d'un support sonore selon la revendication 1, **caractérisé en ce que** lesdits moyens de génération (3, 9) d'au moins un faisceau lumineux comprennent au moins un filtre (9) apte à générer ledit spectre.

5. - Equipement pour la lecture optique d'un support sonore selon la revendication 4, **caractérisé en ce que** ledit filtre (9) est un filtre trichrome.

6. - Equipement pour la lecture optique d'un support sonore selon l'une quelconque des revendications précédentes **caractérisé en ce que** les moyens de génération (3, 9) comprennent une source lumineuse blanche éclairant une zone du support sonore comprenant plusieurs segments du sillon à travers un filtre coloré présentant une variation de couleur dans une direction perpendiculaire à l'axe optique du faisceau incident et parallèle au plan du disque.

7. - Equipement pour la lecture optique d'un support sonore selon la revendication 1, **caractérisé en ce que** les moyens de génération comprennent un système optique formant un condenseur (13, 14) pour focaliser ledit faisceau lumineux sur la surface du support sonore sous la forme d'une tâche lumineuse s'étendant sur plusieurs tronçons de sillons.

8. - Equipement pour la lecture optique d'un support sonore selon la revendication 7, **caractérisé en ce que** ledit condenseur est constitué par deux lentilles asphériques.

9. - Equipement pour la lecture optique d'un support sonore selon la revendication 8, **caractérisé en ce que** le diamètre desdites lentilles asphériques est supérieur à la focale du condenseur.

10. - Equipement pour la lecture optique d'un support sonore selon la revendication 7, **caractérisé en ce que** ledit condenseur contient au moins un miroir courbe.

11. - Equipement pour la lecture optique d'un support sonore selon la revendication 10, **caractérisé en ce que** ledit miroir est un miroir hors axe.

12. - Equipement pour la lecture optique d'un support sonore selon la revendication 7, **caractérisé en ce que** ledit système optique est agencé de sorte à respecter les règles de Scheimpflug.

13. - Equipement pour la lecture optique d'un support sonore selon l'une au moins des revendications précédentes, **caractérisé en ce que** ledit au moins un faisceau lumineux forme un angle d'environ 45° avec la surface du support sonore, dans un plan passant par l'axe de rotation du disque.

14. - Equipement pour la lecture optique d'un support sonore selon l'une au moins des revendications 7 à 13, **caractérisé en ce que** le système optique comprend un miroir pour renvoyer le faisceau réfléchi vers ledit capteur d'image.

15. - Equipement pour la lecture optique d'un support sonore selon la revendication 1, **caractérisé en ce que** le capteur d'image est constitué par une caméra couleur bidimensionnelle.

16. - Equipement pour la lecture optique d'un support sonore selon la revendication 1, **caractérisé en ce que** le capteur d'image est constitué par une caméra couleur monodimensionnelle.

17. - Equipement pour la lecture optique d'un support sonore selon la revendication 1, **caractérisé en ce qu'**il comprend un calculateur relié à la sortie dudit capteur d'image pour assurer le décodage de ladite image et effectuer par un traitement d'image la restitution de la vitesse de déplacement radiale de la zone du support sonore en fonction du spectre de la lumière réfléchie par ladite zone.

18. - Equipement pour la lecture optique d'un support sonore selon la revendication 1, **caractérisé en ce qu'**il comprend un système optique de captation agencé de façon à respecter les règles de Scheimpflug.

## Claims

1. - Equipment for the optical reading of a sound medium (1) having a groove cut, comprising means for generating (3, 9) at least one light beam capable of being reflected by one area of said sound medium and one image sensor (7) positioned so as to collect the light reflected by said area of the sound medium, **characterised in that** said light beam has a light spectrum varying according to its angle of incidence on said area of the sound medium.

2. - Equipment for the optical reading of a sound medium according to claim 1, **characterised in that** said spectrum varies in an angular sector positioned in a variation plan of the local normals of one of the groove sidewall.

3. - Equipment for the optical reading of a sound medium according to claim 1, **characterised in that** said spectrum can further vary discretely in time.

4. - Equipment for the optical reading of a sound medium according to claim 1, **characterised in that** said means for generating (3, 9) at least one light beam comprise at least one filter (9) capable of generating said spectrum.

5. - Equipment for the optical reading of a sound medium according to claim 4, **characterised in that** said filter (9) is a three-colour filter.

6. - Equipment for the optical reading of a sound medium according to any one of the preceding claims, **characterised in that** the generating means (3, 9) comprise a white light source illuminating an area of the sound medium including several segments of the groove through a coloured filter having a colour variation in a direction perpendicular to the optical axis of the incident beam and parallel to the record plan.

7. - Equipment for the optical reading of a sound medium according to claim 1, **characterised in that** the generating means comprise an optical system forming a condenser (13, 14) for focusing said light beam onto the surface of the sound medium, in the form of a light spot extending on several groove sections.

8. - Equipment for the optical reading of a sound medium according to claim 7, **characterised in that** said condenser is composed of two aspherical lenses.

9. - Equipment for the optical reading of a sound medium according to claim 8, **characterised in that** the diameter of said aspherical lenses is greater than the focal length of the condenser.

10. - Equipment for the optical reading of a sound medium according to claim 7, **characterised in that** said condenser contains at least one curved mirror.

11. - Equipment for the optical reading of a sound medium according to claim 10, **characterised in that** said mirror is an off-axis mirror.

12. - Equipment for the optical reading of a sound medium according to claim 7, **characterised in that** said optical system is so arranged as to comply with Scheimpflug's rule.

13. - Equipment for the optical reading of a sound medium according to at least one of the preceding claims, **characterised in that** said at least one light beam forms an angle of about 45° with the surface of the sound medium, in a plan crossing the record rotation axis.

14. - Equipment for the optical reading of a sound medium according to at least one of claims 7 to 13, **characterised in that** the optical system comprises a mirror for sending back the reflected beam to said image sensor.

15. - Equipment for the optical reading of a sound medium according to claim 1, **characterised in that** the image sensor is composed of a two dimensional colour camera.

16. - Equipment for the optical reading of a sound medium according to claim 1, **characterised in that** the image sensor is composed of a monodimensional colour camera.

17. - Equipment for the optical reading of a sound medium according to claim 1, **characterised in that** it comprises one analyser connected to the image sensor output to ensure the decoding of said image and render, through the image processing, the radial motion speed of the area of the sound medium, according to the spectrum of the light reflected by said area.

18. - Equipment for the optical reading of a sound medium according to claim 1, **characterised in that** it comprises one sensing optical system so arranged as to comply with Scheimpflug's rule.

## Patentansprüche

1. - Ausrüstung für das optische Lesen eines Tonträgers (1), der die Gravur einer Rille aufweist, Mittel zur Generierung (3, 9) von mindestens einem Strahlenbündel, das geeignet ist, von einer Zone des besagten Tonträgers reflektiert zu werden, und einen Bildaufnehmer (7), der so angeordnet ist, daß er das von der besagten Zone des Tonträgers reflektierte Licht aufnehmen kann, **dadurch gekennzeichnet, daß** das besagte Strahlenbündel je nach seinem Einfallwinkel auf die besagte Zone des Tonträgers eine Variation des Lichtspektrums aufweist.

2. - Ausrüstung für das optische Lesen eines Tonträgers nach Anspruch 1, **dadurch gekennzeichnet, daß** das besagte Spektrum in einem Winkelsektor variiert, der auf einer Variationsebene der örtlichen Normalen einer der Flanken der Rille plaziert ist.

3. - Ausrüstung für das optische Lesen eines Tonträgers nach Anspruch 1, **dadurch gekennzeichnet, daß** das besagte Spektrum ferner zeitabhängig diskret variabel ist.

4. - Ausrüstung für das optische Lesen eines Tonträgers nach Anspruch 1, **dadurch gekennzeichnet, daß** die besagten Mittel zur Generierung (3, 9) von mindestens einem Strahlenbündel mindestens ein Filter (9) umfassen, das geeignet ist, das besagte Spektrum zu generieren.

5. - Ausrüstung für das optische Lesen eines Tonträgers nach Anspruch 4, **dadurch gekennzeichnet, daß** das besagte Filter (9) ein Dreifarbenfilter ist.

6. - Ausrüstung für das optische Lesen eines Tonträgers nach einem beliebigen der vorstehenden Ansprüche, **dadurch gekennzeichnet, daß** die Mittel zur Generierung (3, 9) eine weiße Lichtquelle umfassen, die eine mehrere Abschnitte der Rille umfassende Zone des Tonträgers durch ein Farbfilter beleuchtet, das eine Farbvariation in einer senkrecht zur optischen Achse des einfallenden Strahlenbündels stehenden Richtung und parallel zur Ebene der Platte aufweist.

7. - Ausrüstung für das optische Lesen eines Tonträgers nach Anspruch 1, **dadurch gekennzeichnet, daß** die Mittel zur Generierung ein optisches System umfassen, das einen Kondensor (13, 14) bildet, um das besagte Strahlenbündel auf der Oberfläche des Tonträgers in Form eines leuchtenden Flecks zu fokalisieren, der sich über mehrere Rillenabschnitte erstreckt.

8. - Ausrüstung für das optische Lesen eines Tonträgers nach Anspruch 7, **dadurch gekennzeichnet, daß** der besagte Kondensor aus zwei torischen Linsen besteht.

9. - Ausrüstung für das optische Lesen eines Tonträgers nach Anspruch 8, **dadurch gekennzeichnet, daß** der Durchmesser der besagten torischen Linsen größer als die Brennweite des Kondensors ist.

10. - Ausrüstung für das optische Lesen eines Tonträgers nach Anspruch 7, **dadurch gekennzeichnet, daß** der besagte Kondensor mindestens einen gekrümmten Spiegel enthält.

11. - Ausrüstung für das optische Lesen eines Tonträgers nach Anspruch 10, **dadurch gekennzeichnet, daß** der besagte Spiegel ein Spiegel außerhalb der Achse ist.

12. - Ausrüstung für das optische Lesen eines Tonträgers nach Anspruch 7, **dadurch gekennzeichnet, daß** das besagte optische System so gestaltet ist, daß die Scheimpflug Regeln eingehalten werden.

13. - Ausrüstung für das optische Lesen eines Tonträgers nach mindestens einem beliebigen der vorstehenden Ansprüche, **dadurch gekennzeichnet, daß** das besagte mindestens eine Strahlenbündel einen Winkel von circa 45 Grad zur Fläche des Tonträgers in einer Ebene bildet, die durch die Drehachse der Platte verläuft.

14. - Ausrüstung für das optische Lesen eines Tonträgers nach mindestens einem beliebigen der vorstehenden Ansprüche 7 bis 13, **dadurch gekennzeichnet, daß** das optische System einen Spiegel umfaßt, mit dem das reflektierte Strahlenbündel zum besagten Bildaufnehmer zurückgeworfen wird.

15. - Ausrüstung für das optische Lesen eines Tonträgers nach Anspruch 1, **dadurch gekennzeichnet, daß** der Bildaufnehmer aus einer zweidimensionalen Farbkamera besteht.

16. - Ausrüstung für das optische Lesen eines Tonträgers nach Anspruch 1, **dadurch gekennzeichnet, daß** der Bildaufnehmer aus einer eindimensionalen Farbkamera besteht.

17. - Ausrüstung für das optische Lesen eines Tonträgers nach Anspruch 1, **dadurch gekennzeichnet, daß** sie einen an den Ausgang des besagten Bildaufnehmers angeschlossenen Rechner zur Sicherstellung der Decodierung des besagten Bildes umfaßt, und damit durch eine Bildverarbeitung die radiale Bewegungsgeschwindigkeit der Zone des Tonträgers je nach Spektrum des von der besagten Zone reflektierten Lichts wieder hergestellt werden kann.

18. - Ausrüstung für das optische Lesen eines Tonträgers nach Anspruch 1, **dadurch gekennzeichnet, daß** sie ein optisches Auffangssystem umfaßt, das so gestaltet ist, daß die Scheimpflug Regeln eingehalten werden.
